# EUROPEAN PATENT SPECIFICATION

(11) **EP 4 318 822 B1**
(45) Date of publication and mention of the grant of the patent: **18.03.2026**
(21) Application number: 22188435.6
(22) Date of filing: 03.08.2022
(51) Int. Cl.: H01R 13/74, H01R 13/641, F16B 41/00, F16B 37/14, H01R 13/621

(54) **CONNECTOR ASSEMBLY AND METHOD FOR ASSEMBLING CONNECTORS**
VERBINDERANORDNUNG UND VERFAHREN ZUM ZUSAMMENBAU VON VERBINDERN
ENSEMBLE CONNECTEUR ET PROCÉDÉ D'ASSEMBLAGE DE CONNECTEURS

(43) Date of publication of application: 07.02.2024
(73) Proprietor: Aptiv Technologies AG, 8200 Schaffhausen (CH)
(72) Inventor: MENEZ, Frédéric, 78125 HERMERAY (FR); FABRE, Jean, 28000 CHARTRES (FR)
(74) Representative: INNOV-GROUP

(56) References cited:
- EP-A2- 3 376 608

## Description

The present disclosure relates to the field of connectors, and in particular, but not exclusively, the field of electrical connectors for motor vehicles, such as for example electrical power connectors.

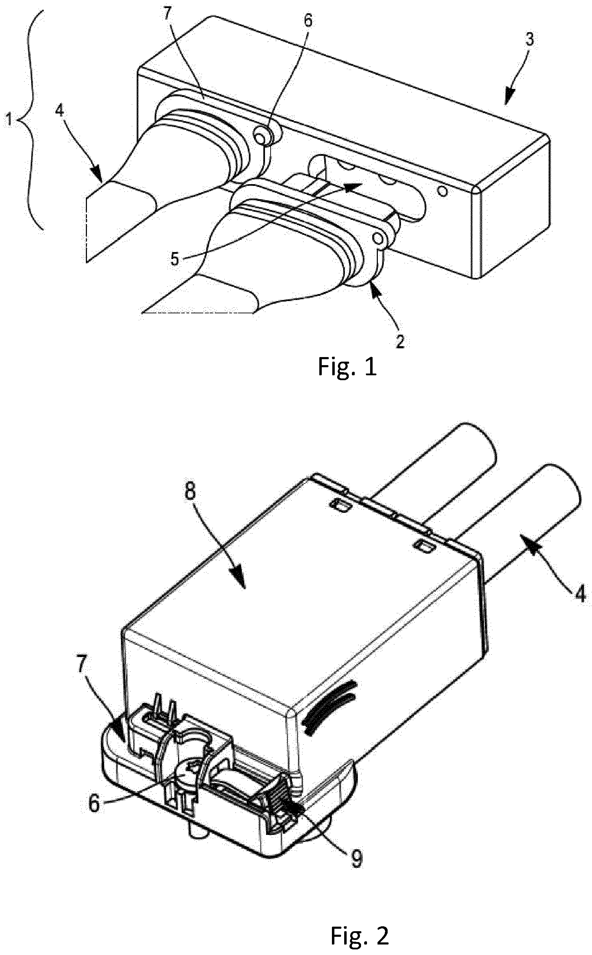

Figure 1 shows an example of a connector assembly, of the prior art, for high voltage currents. According to this example, the connector assembly 1 comprises a connector 2 and a counter-connector 3 (that is a mating connector or a counterpart connector). The connector 2 comprises for example pins (male contacts/terminals) connected to electrical cables 4. The counter-connector 3 includes for example female contacts/terminals, into which the pins of the connector 2 may be inserted. These female contacts are electrically connected for example to electrical conducting bars ("busbars") and/or to devices 5 (current converters, motors etc.), for example accommodated in a housing onto which the counter-connector 3 is mounted. The connector 2 is assembled on the counter-connector 3, then the connector 2 and the counter-connector 3 are fastened to each other by means of screws 6 engaged in a hole in a flange 7 on a connector 2 side, before being screwed to the counter-connector 3.

Fastening connectors 2, 3 by means of screws generally gives rise to a problem of checking that screwing is complete and sufficient. In cases where screwing might not have been achieved, or might have been achieved incompletely, the electrical connection may not be established or may be lost after a certain time due to the effect of vibration for example.

To alleviate this kind of problem, a solution has been proposed which is disclosed in EP3376608A2. Indeed, according to EP3376608A2, a safety device is proposed that can move between two positions, one of which being only accessible if the screw is fully screwed in its final position, where the connector and counter-connector are fully mated.

However, if the screw has been over tightened for example, the screw thread may be stripped. But such a problem may be not detected by the device disclosed in EP3376608A2. Thought, in such a case, after a while, with vibrations, the connector 2 and counter-connector 3 may disconnect, and the connection may be lost.

In the prior art connector assemblies may be equipped with a control loop, also known as interlock circuit, to detect when of the connector 2 and the counter-connector 3 are not properly mated.

However, an interlock circuit requires more complex connectors, a control circuit, additional components and an additional control function, which creates additional costs that one would like to avoid.

A solution that at least partially solves one of the above-mentioned problems is disclosed below.

The present disclosure provides a connector assembly according to claim 4.

In the connector assembly of the present disclosure, the connector and counter-connector are fastened to each other by means of at least one screw. The screw includes a shank and a head. The shank is engaged in an orifice disposed in the connector and the screw head is held, by the connector, on one side of the orifice. The connector and the counter-connector are in a connected position when the screw is in a position called "final fastened position", that is to say when it is screwed until the connector and the counter-connector are tightened on each other at least in the vicinity, of the screw. In other words, the final fastened position of the screw is reached when the screw is screwed to the maximum and when the distance between the screw head and the part of the counter-connector on which the screw is inserted is minimum. Furthermore, the connector or the counter-connector includes a safety device. The safety device constitutes means of ensuring that the screw is screwed in the final fastened position. The safety device is moveable, and can be moved between a first locked position and a second locked position distinct from the first locked position. In the first locked position, the safety device authorizes screwing or unscrewing of the screw. However, in the first locked position, the safety device cannot be moved if the screw is not in the final fastened position.

Thus, in the first locked position, it is only possible to move the safety device if the connector and the counter-connector are fastened and tightened on each other by means of the screw, that is to say, when the screw is in its position called "final fastened position" in this document. In other words, the fact of being able to move the safety device from the first locked position to the second locked position is a true indication that the screw is in the final fastened position and that the connector and counter-connectors are properly fastened and connected to each other. In this way, it is possible to check that the operation of screwing the screw has truly been accomplished to completion. Therefore, the safety device constitutes means of ensuring that the connector and counter-connector are properly and fully mated. In other words, the safety device is a connector position assurance device (i.e. a CPA device).

Further, the safety device comprises locking means. The locking means are configured for engaging the connector and counter-connector together, when safety the device is positioned in the second locked position.

Therefore, if the screw has been over-tightened and the screw thread is stripped and there is a risk that the screw will loosen due to vibration, the connector assembly remains connected.

The connector assembly according to the present disclosure may possibly include any of the features of claims 5 to 6, considered separately or each combined one with one or more others.

According to the invention, the present disclosure provides a connector according to claim 1.

The connector may possibly include any of the features of claims 2 and 3 considered separately or each combined one with one or more others.

According to another aspect, the present disclosure provided a method according to claim 8 or 9.

Further features and advantages of the present disclosure will become apparent from the following detailed description and the accompanying drawings. In these drawings:
- Figure 1 diagrammatically illustrates in perspective an example of a connector assembly of the prior art;
- Figure 2 diagrammatically illustrates in perspective an embodiment example of a connector;
- Figure 3 diagrammatically illustrates in perspective and in cross-section A portion of the embodiment of the connector illustrated in Figure 2, with the safety device in the first locked position;
- Figure 4 diagrammatically illustrates in section an example of embodiment of the connector assembly comprising the connector illustrated in Figures 2 and 3, with the safety device in the first locked position;
- Figure 5 diagrammatically illustrates in section a detail of the embodiment of the connector assembly illustrated in Figure 4, with the safety device in an unlocked position;
- Figure 6 diagrammatically illustrates in section a detail of the embodiment of the connector assembly illustrated in Figures 4 and 5, with the safety device in a second locked position;
- Figure 7 diagrammatically illustrates in top view a detail of the embodiment of the connector assembly illustrated in Figures 4 to 6, with the safety device in its second locked position.

In this document, the term "counter-connector" generally and broadly designates any element intended to be electrically connected to a connector. It can therefore be another connector, a housing on which connection components are assembled, a wall through which an electrical connection must be made, etc.

In this document, the terms "above", "below", "upper", "lower" etc. are purely conventional and refer where applicable to the orientations as shown on the figures. On the figures, the same reference numbers designate identical or similar elements. An example of an embodiment of a connector 2 is illustrated in Figure 2. Other embodiments of connector assemblies can be envisaged. For example, the embodiments disclosed in EP3376608A2 may be modified for implementing a safety device 9 as disclosed below.

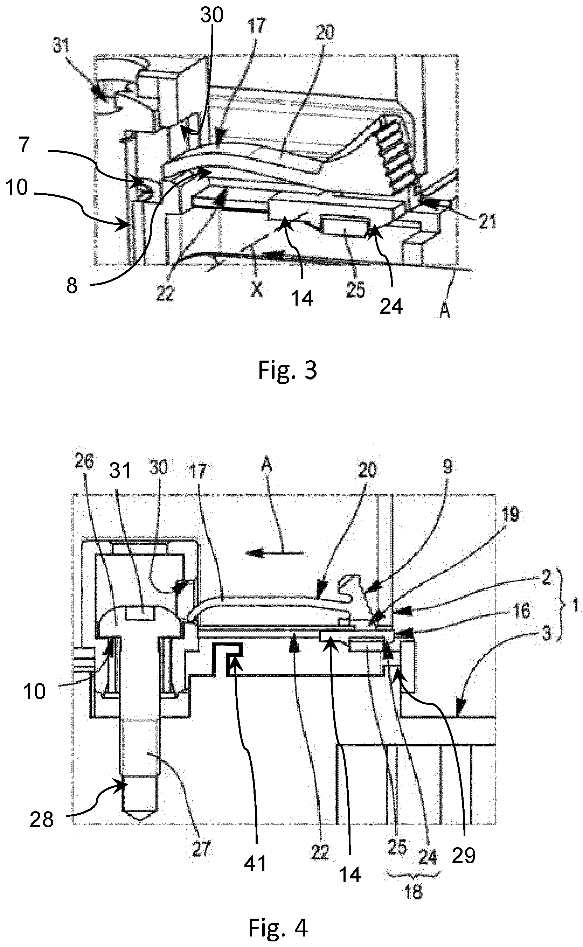

The connector 2 shown in Figure 2 is configured to be mounted on a counter-connector 3. The connector 2 includes a housing 8 with a flange 7. The housing 8 encloses power contacts (not illustrated) connected to electrical cables 4. A safety device 9 (CPA) is assembled to slide on the flange 7. A screw 6 is inserted in an orifice 10 disposed in the flange 7 (see Figure 3).

Figure 4 illustrates, in section, a connector assembly 1, with the connector 2 of Figure 2, as well as a counter-connector 3. On this figure, the connector 2 and the counter-connector 3 are in the pre-coupling position. In other words, the connector 2 and the counter-connector 3 are positioned one above the other (potentially, as illustrated in Figure 2, partially engaged one inside the other and with the screw partially screwed), but the contacts of the connector and the contacts of the counter-connector 3 are not connected. For the connector assembly 1 to be functional, it is therefore important to be able to ensure that the connector 2 and the counter-connector 3 are fully mated. As will be explained below, the safety device 9 allows to check that the connector 2 and the counter-connector 3 are properly mated, as well as to maintain them fully mated.

The connector assembly 1 is, for example, intended to be supplied under 400 Volts or more. Therefore, the respective housings of the connector 2 and counter-connector 3 enclose power terminals (not shown).

In Figures 3 and 4, the safety device 9 is in its first locked position.

The safety device 9 is made from a single moulded plastic piece. As shown in Figure 4, it comprises locking means 14, a slide block 16, a cover 17, blocking means 18, a support 19. The cover 17 is connected to the support 19 by a flexible strip 20. The support 19 is connected to two pads 21 situated either side of the support 19 and forming the slide block 16 (see Figure 3). In Figure 3, only one pad can be seen, the other one is symmetrically arranged with regard to the cross-section plane. Seen from above, the slide block 16 would have a general U-shaped, the two pads 21 each respectively corresponding to a branch of this U. The support 19 is connected to the central part of this U, situated between the branches of the U. The central part of the U is flexibly and elastically articulated on the branches of the U. The support 19 can therefore rock around an axis of articulation X and may become inserted, at least partially, between the branches of the U when pressure is exerted downwards on the safety device 9, in order to lift the cover 17.

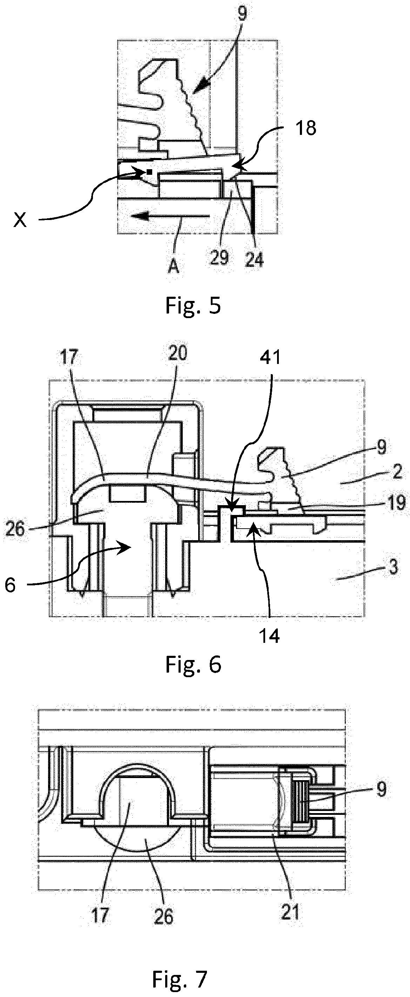

The pads 21 are assembled to slide each respectively in a slide 22 disposed in the housing 8. Therefore, they guide the safety device 9 between its first and second locked positions (corresponding respectively to Figures 4 and 6 for example), in a movement along a direction of actuation A (perpendicular to the axis of articulation X).

The blocking means 18 are essentially in the shape of hook with a rear lug 24 cooperating with a holding element 25, here in the form of a beam made in one piece with the housing 8. The rear lug 24 is located between the branches of the U forming the slide block 16, hence it does do not cooperate with the slides 22.

With the rear lug 24 being stopped on the holding element 25, along the direction of actuation A, the blocking means 18 hold the safety device 9 on the holding element 25, in its first locked position of the safety device. As the rear lug 24 is stopped on the holding element 25, the safety device 9 cannot be moved from the first locked position, as long as the counter-connector 3 is not properly mated with the connector 3.

The screw 6 includes a head 26 and a shank 27. The shank 27 is threaded and is screwed into a bore 28 disposed in the counter-connector 3.

In the first locked position of the safety device 9, the cover 17 does not cover the screw head 26 and a tool can, depending on the type of screw head 26, either be inserted in a recess 31 (see Figures 3 and 4) made in the screw head 26 in order to drive the screw 6 rotationally around its longitudinal axis, or be placed on or around the screw head 26, also to drive the screw 6 rotationally around its longitudinal axis. As the screw 6 is progressively screwed into the counter-connector 3, with the head 26 being held by the flange 7, the screw 6 displaces the connector 2, and the connector 2 and the counter-connector 3 move toward each other. The use of screws for mating the connector 2 and the counter-connector 3 is particularly helpful when power terminals (with relatively large sections) are accommodated in the connector 2 and the counter-connector 3. The use of screws may avoid using a mate assist devices (such as a lever or a slider for example).

When the screw 6 is in the final fastened position (Figures 5 to 7), the connector 2 and the counter-connector 3 are tightened on each other and the counter-connector 3 interacts with the safety device 9. More precisely, as shown in Figure 5, the connector 2 and the counter-connector 3 move toward each other, a protuberance 29 of the counter-connector 3 rises towards the safety device 9 and pushes the rear lug 24 upwards. In this movement of the rear lug 24, the hook of the blocking means 18 rocks around the axis of articulation X. With the blocking means 18 being rotationally moveable around this axis of articulation X, the rear lug 24 therefore escapes from the holding element 25. The safety device is then in an unlocked position. The safety device 9 can be moved, in the direction of actuation A, towards the screw 6, so as to bring the cover 17 above the screw head 26. Eventually, a pressure is applied on the safety device 9 so as to move the cover 17 upwards, over the screw head 26.

It is to be noted that if the connector 2 and the counter-connector 3 are coupled, but the screw 6 is not screwed to the final fastened position, the rear lug 24 will be released from the holding element 25, but it will not be possible to move the safety device 9 to its second locked position. Indeed, in order for the safety device 9 to be moved to its second locked position, the end of the cover 17 must slide over the screw head 26. On one hand, this is not possible as long as the screw 6 is not sufficiently screwed, since if it is not, the cover 17 remains blocked either by the shank 27 or by the lower edge of the screw head 26. On the other hand, even if the end of the cover 17 starts to slide on the screw head 26, but the screw head 26 is still too high, the cover 17 touches a bridge 30 that defines a maximum height for a movement upwards of the cover 17 and thereby forms a vertical stop for the cover 17.

When the connector 2 and the counter-connector 3 are at the same time coupled and held by the screw 6 in the final fastened position, the safety device 9 is released from the holding element 25 and the cover 17 can pass under the bridge 30. The safety device 9 can then be moved from its first locked position to its second locked position (see Figures 6 and 7). In this second locked position, the cover 17 is positioned on the screw head 26. Its curved shape, relatively complementary to the shape of the screw head 26 on one hand, and the elastic nature of the flexible strip 20, which tends to press the cover 17 on the screw head 26 on the other hand, assist with blocking and locking the safety device 9 in this position. The safety device 9 cannot be released from this position without a deliberate and appropriate action of an operator to move the safety device 9 back to its first locked position. The operator must effectively pull the safety device parallel to the direction of actuation A by moving the safety device 9 away from the screw 6 and overcoming the force due to the fit between the respective shapes of the cover 17 on the screw head 26 and the pressure exerted by the flexible strip 20 on the cover 17. This operation makes it possible to guarantee that the safety device 9 can only be moved from its second locked position to its first locked position by a deliberate action.

As can be seen in Figures 6 and 7, when the safety device 9 is in its second locked position, the cover 17 partially covers the screw head 26 and completely covers the recess into which a tool could have been inserted to unscrew the screw 6. Although this is not illustrated, it is understood that when the screw 6 is in the final fastened position and the connector 2 and the counter-connector 3 are coupled, their respective contacts are connected.

In the embodiment example shown in Figures 4 and 6, the safety device 9 comprises the locking means 14 and the counter-connector 3 comprises a striker 41. The locking means 14 and the striker 41 are configured to cooperate with each other to hold the connector 2 and the counter-connector 3 assembled together (i.e. fully mated) when the safety device 9 is positioned in the second locked position. The locking means 14 cooperate with the connector 2 through portions of the safety device 9, such as the support 19 and the slide block 16. According to the illustrated example, the locking means 14 form a bolt. For example, the locking means 14 form a single piece with the slide block 16 and the support 19. When the safety device 9 is positioned in the second locked position, the bolt and the striker 41engage each other in the form of a lock. For example, the striker 41 is moulded with the counter-connector housing. Therefore, when the safety device 9 is positioned in the second locked position, the locking means 14 locks the connector 2 with the counter-connector 3.

It may be noted that as the connector 2 and counter-connector 3 remain held together by the locking means 14 described above, even if the screw 6 is no longer functional, no accidental disconnection can occur as long as the safety device 9 is in its second locking position. As it is not necessary to detect a possible disconnection, it is possible to dispense with fitting the connector and counter-connector with contacts configured to be integrated in an interlock circuit. The power supply to the connector 2 and counter-connector 3 can therefore be provided independently of any interlock circuit. For example, a circuit breaker may be used to stop the power supply to the connector assembly 1.

Multiple variants can be envisaged. In the embodiment disclosed above, the connector 2 is a header and the counter-connector is a socket, but according to a variant, the connector 2 may be a socket and the counter-connector may be a header. Similarly, the safety device 9 may be assembled to be moveable on the counter-connector 3 (rather than on the connector 2), then unblocking the safety device 9 to allow it to be moved from its first locked position to its second locked position is achieved by interaction with the connector 2 when the connector 2 is sufficiently close to the counter-connector 3 and when the connector 2 and the counter-connector 3 are in the connected position, coupled, with the screw 6 in its final fastened position. According to variants, the screw may be screwed in the connector rather than in the counter-connector.

## Claims

1. Connector (2) to be mated with a counter-connector, said connector (2) including at least one orifice (10) and a screw (6) with a shank (27) engaged in the orifice (10) and a screw head (26) held, on one side of the orifice (10), on the connector (2), the connector (2) further including a safety device (9), moveable between
- a first locked position, in which the screw (6) can be screwed or unscrewed and in which the safety device (9) cannot be moved if the screw (6) is not in a final fastened position, and
- a second locked position,
**characterized in that** that the safety device (9) comprises locking means (14) configured for engaging said counter-connector (3) and holding the connector (2) and the counter-connector (3) together when the safety device (9) is positioned in the second locked position.

2. Connector (2) according to Claim 1, wherein the connector (2) includes a housing (8) with at least one slide (22), and the safety device (9) comprises
- a slide block (16) cooperating with the slide (22) to guide the movement, along a direction of actuation (A), of the safety device (9) between its first and its second locked positions,
- a cover (17) for masking, at least partially, when the safety device (9) is in its second locked position, a recess (31) disposed in the screw head (26), into which a tool can be inserted to screw or unscrew the screw (6), when the safety device (9) is in its second position, and
- blocking means (18) for holding the safety device (9) in its first locked position,
wherein the locking means (14) form a single moulded part with the slide block (16), the cover (17) and the blocking means (18).

3. Connector (2) according to Claim 1 or 2, wherein the locking means (14) is moveable along the direction of actuation (A).

4. Connector assembly (1) comprising the connector (2) of any of claims 1 to 3, and a counter-connector (3), the connector (2) and the counter-connector (3) being fastened to each other by means of said at least one screw (6), the connector (2) and the counter-connector (3) being in a connected position with the screw (6) in the final fastened position,
wherein the safety device (9), is in the second locked position, in which the safety device (9) at least partially covers the screw head (26) so as to prevent screwing or unscrewing the screw (6), and in which the locking means (14) hold the connector (2) and the counter-connector (3) together.

5. Connector assembly (1) according to Claim 4, wherein the safety device (9) is assembled on the connector (2), and the counter-connector (3) interacts with the safety device (9) to release it from its first locked position when the connector (2) and the counter-connector (3) are in the connected position with the screw (6) in a final fastened position.

6. Connector assembly (1) according to Claim 5, wherein the locking means (14) comprises a bolt and the counter-connector (3) comprises a striker (41), the bolt and striker (41) being configured to engage each other in the form of a lock.

7. Connector assembly (1) according to any one of claims 4 to 6, wherein the connector (2) and counter-connector (3) are devoid of terminals configured for being electrically connected to an interlock circuit.

8. Method for assembling a connector assembly (1) comprising a connector (2) and a counter-connector (3), wherein
- the connector (2) and the counter-connector (3) are fastened to each other by means of at least one screw (6) including a shank (27) and a screw head (26),
- the shank (27) is engaged in an orifice (10) disposed in the connector (2),
- with the screw head (26) being held by the connector (2), the screw (6) is screwed to the counter-connector (3) until in a final fastened position, in which the connector (2) and the counter-connector (3) are tightened on each other at the screw (6),
wherein once the screw (6) has been screwed until in its final fastened position, a safety device (9) is moved,
- from a first locked position, in which the screw (6) can be screwed or unscrewed, to
- a second locked position,
**characterized in that**, the safety device (9) displaces locking means (14), when moved from its first locked position to its second locked position to lock the connector (2) and the counter-connector (3), when the safety device (9) is in its second position.

9. Method according to claim 8, comprising a step of supplying power to the connector (2) and counter-connector (3), the supplying step being controlled independently of an interlock circuit.

## Patentansprüche

1. Verbinder (2) zum Stecken mit einem Gegenverbinder, wobei der besagte Verbinder (2) mindestens eine Öffnung (10) und eine Schraube (6) mit einem Schaft (27), der in die Öffnung (10) eingreift, und einem Schraubenkopf (26), der auf einer Seite der Öffnung (10) an dem Verbinder (2) gehalten wird, aufweist, wobei der Verbinder (2) ferner eine Sicherheitsvorrichtung (9) aufweist, die beweglich ist zwischen
• einer ersten verriegelten Position, in der die Schraube (6) verschraubt oder gelöst werden kann und in der die Sicherheitsvorrichtung (9) nicht bewegt werden kann, wenn sich die Schraube (6) nicht in einer Endbefestigungsposition befindet, und
• einer zweiten verriegelten Position, **dadurch gekennzeichnet, dass** die Sicherheitsvorrichtung (9) Verriegelungsmittel (14) umfasst, die dazu konfiguriert sind, mit dem besagten Gegenverbinder (3) in Eingriff zu treten und den Verbinder (2) und den Gegenverbinder (3) zusammenzuhalten, wenn die Sicherheitsvorrichtung (9) in der zweiten verriegelten Position positioniert ist.

2. Verbinder (2) nach Anspruch 1, wobei der Verbinder (2) ein Gehäuse (8) mit mindestens einer Führung (22) aufweist und die Sicherheitsvorrichtung (9) umfasst:
• einen Gleitblock (16), der mit der Führung (22) zusammenwirkt, um die Bewegung der Sicherheitsvorrichtung (9) entlang einer Betätigungsrichtung (A) zwischen ihrer ersten und ihrer zweiten verriegelten Position zu führen,
• eine Abdeckung (17) zum zumindest teilweisen Abdecken einer in dem Schraubenkopf (26) angeordneten Ausnehmung (31), in die ein Werkzeug zum Verschrauben oder Lösen der Schraube (6) eingeführt werden kann, wenn sich die Sicherheitsvorrichtung (9) in ihrer zweiten verriegelten Position befindet, und
• Blockiermittel (18) zum Halten der Sicherheitsvorrichtung (9) in ihrer ersten verriegelten Position, wobei die Verriegelungsmittel (14) mit dem Gleitblock (16), der Abdeckung (17) und den Blockiermitteln (18) ein einziges Formteil bilden.

3. Verbinder (2) nach Anspruch 1 oder 2, wobei die Verriegelungsmittel (14) entlang der Betätigungsrichtung (A) beweglich sind.

4. Verbinderanordnung (1), umfassend den Verbinder (2) nach einem der Ansprüche 1 bis 3 und einen Gegenverbinder (3), wobei der Verbinder (2) und der Gegenverbinder (3) mittels der besagten mindestens einen Schraube (6) aneinander befestigt sind, wobei sich der Verbinder (2) und der Gegenverbinder (3) in einer verbundenen Position befinden, in der die Schraube (6) in der Endbefestigungsposition ist, wobei sich die Sicherheitsvorrichtung (9) in der zweiten verriegelten Position befindet, in der die Sicherheitsvorrichtung (9) den Schraubenkopf (26) zumindest teilweise abdeckt, um ein Verschrauben oder Lösen der Schraube (6) zu verhindern, und in der die Verriegelungsmittel (14) den Verbinder (2) und den Gegenverbinder (3) zusammenhalten.

5. Verbinderanordnung (1) nach Anspruch 4, wobei die Sicherheitsvorrichtung (9) an dem Verbinder (2) montiert ist und der Gegenverbinder (3) mit der Sicherheitsvorrichtung (9) zusammenwirkt, um sie aus ihrer ersten verriegelten Position zu lösen, wenn sich der Verbinder (2) und der Gegenverbinder (3) in der verbundenen Position befinden, in der die Schraube (6) in einer Endbefestigungsposition ist.

6. Verbinderanordnung (1) nach Anspruch 5, wobei die Verriegelungsmittel (14) einen Riegel umfassen und der Gegenverbinder (3) einen Schließbügel (41) umfasst, wobei der Riegel und der Schließbügel (41) so konfiguriert sind, dass sie in Form eines Schlosses ineinandergreifen.

7. Verbinderanordnung (1) nach einem der Ansprüche 4 bis 6, wobei der Verbinder (2) und der Gegenverbinder (3) frei von Anschlüssen sind, die für eine elektrische Verbindung mit einer Interlock-Schaltung konfiguriert sind.

8. Verfahren zum Montieren einer Verbinderanordnung (1), die einen Verbinder (2) und einen Gegenverbinder (3) umfasst, wobei
• der Verbinder (2) und der Gegenverbinder (3) mittels mindestens einer Schraube (6), die einen Schaft (27) und einen Schraubenkopf (26) aufweist, aneinander befestigt werden,
• der Schaft (27) in eine in dem Verbinder (2) angeordnete Öffnung (10) eingreift,
• wobei bei durch den Verbinder (2) gehaltenem Schraubenkopf (26) die Schraube (6) in den Gegenverbinder (3) bis in eine Endbefestigungsposition geschraubt wird, in der der Verbinder (2) und der Gegenverbinder (3) an der Schraube (6) aneinander festgezogen sind, wobei, sobald die Schraube (6) bis in ihre Endbefestigungsposition geschraubt worden ist, eine Sicherheitsvorrichtung (9) bewegt wird,
• von einer ersten verriegelten Position, in der die Schraube (6) verschraubt oder gelöst werden kann,
• in eine zweite verriegelte Position, **dadurch gekennzeichnet, dass** die Sicherheitsvorrichtung (9) beim Bewegen von ihrer ersten verriegelten Position in ihre zweite verriegelte Position Verriegelungsmittel (14) verschiebt, um den Verbinder (2) und den Gegenverbinder (3) zu verriegeln, wenn sich die Sicherheitsvorrichtung (9) in ihrer zweiten Position befindet.

9. Verfahren nach Anspruch 8, umfassend einen Schritt des Zuführens von Strom zu dem Verbinder (2) und dem Gegenverbinder (3), wobei der Zuführschritt unabhängig von einer Interlock-Schaltung gesteuert wird.

## Revendications

1. Connecteur (2) destiné à être accouplé à un contre-connecteur, ledit connecteur (2) comprenant au moins un orifice (10) et une vis (6) avec une tige (27) engagée dans l'orifice (10) et une tête de vis (26) maintenue, d'un côté de l'orifice (10), sur le connecteur (2), le connecteur (2) comprenant en outre un dispositif de sécurité (9), mobile entre
• une première position verrouillée, dans laquelle la vis (6) peut être vissée ou dévissée et dans laquelle le dispositif de sécurité (9) ne peut pas être déplacé si la vis (6) n'est pas dans une position de fixation finale, et
• une seconde position verrouillée, **caractérisé en ce que** le dispositif de sécurité (9) comprend des moyens de verrouillage (14) configurés pour engager ledit contre-connecteur (3) et maintenir ensemble le connecteur (2) et le contre-connecteur (3) lorsque le dispositif de sécurité (9) est positionné dans la seconde position verrouillée.

2. Connecteur (2) selon la revendication 1, dans lequel le connecteur (2) comprend un boîtier (8) avec au moins une glissière (22), et le dispositif de sécurité (9) comprend
• un bloc coulissant (16) coopérant avec la glissière (22) pour guider le mouvement, le long d'une direction d'actionnement (A), du dispositif de sécurité (9) entre sa première et sa seconde position verrouillée,
• un couvercle (17) pour masquer, au moins partiellement, lorsque le dispositif de sécurité (9) est dans sa seconde position verrouillée, un évidement (31) disposé dans la tête de vis (26), dans lequel un outil peut être inséré pour visser ou dévisser la vis (6), lorsque le dispositif de sécurité (9) est dans sa seconde position, et
• des moyens de blocage (18) pour maintenir le dispositif de sécurité (9) dans sa première position verrouillée, dans lequel les moyens de verrouillage (14) forment une seule pièce moulée avec le bloc coulissant (16), le couvercle (17) et les moyens de blocage (18).

3. Connecteur (2) selon la revendication 1 ou 2, dans lequel les moyens de verrouillage (14) sont mobiles le long de la direction d'actionnement (A).

4. Ensemble connecteur (1) comprenant le connecteur (2) selon l'une quelconque des revendications 1 à 3, et un contre-connecteur (3), le connecteur (2) et le contre-connecteur (3) étant fixés l'un à l'autre au moyen de ladite au moins une vis (6), le connecteur (2) et le contre-connecteur (3) étant dans une position connectée avec la vis (6) dans la position de fixation finale, dans lequel le dispositif de sécurité (9) est dans la seconde position verrouillée, dans laquelle le dispositif de sécurité (9) recouvre au moins partiellement la tête de vis (26) de manière à empêcher le vissage ou le dévissage de la vis (6), et dans laquelle les moyens de verrouillage (14) maintiennent ensemble le connecteur (2) et le contre-connecteur (3).

5. Ensemble connecteur (1) selon la revendication 4, dans lequel le dispositif de sécurité (9) est assemblé sur le connecteur (2), et le contre-connecteur (3) interagit avec le dispositif de sécurité (9) pour le libérer de sa première position verrouillée lorsque le connecteur (2) et le contre-connecteur (3) sont dans la position connectée avec la vis (6) dans une position de fixation finale.

6. Ensemble connecteur (1) selon la revendication 5, dans lequel les moyens de verrouillage (14) comprennent un pêne et le contre-connecteur (3) comprend une gâche (41), le pêne et la gâche (41) étant configurés pour s'engager l'un avec l'autre sous la forme d'une serrure.

7. Ensemble connecteur (1) selon l'une quelconque des revendications 4 à 6, dans lequel le connecteur (2) et le contre-connecteur (3) sont dépourvus de bornes configurées pour être connectées électriquement à un circuit d'interverrouillage.

8. Procédé d'assemblage d'un ensemble connecteur (1) comprenant un connecteur (2) et un contre-connecteur (3), dans lequel
• le connecteur (2) et le contre-connecteur (3) sont fixés l'un à l'autre au moyen d'au moins une vis (6) comprenant une tige (27) et une tête de vis (26),
• la tige (27) est engagée dans un orifice (10) disposé dans le connecteur (2),
• la tête de vis (26) étant maintenue par le connecteur (2), la vis (6) est vissée sur le contre-connecteur (3) jusqu'à une position de fixation finale, dans laquelle le connecteur (2) et le contre-connecteur (3) sont serrés l'un contre l'autre au niveau de la vis (6), dans lequel une fois que la vis (6) a été vissée jusqu'à sa position de fixation finale, un dispositif de sécurité (9) est déplacé,
• d'une première position verrouillée, dans laquelle la vis (6) peut être vissée ou dévissée, à
• une seconde position verrouillée, **caractérisé en ce que**, le dispositif de sécurité (9) déplace des moyens de verrouillage (14), lorsqu'il est déplacé de sa première position verrouillée à sa seconde position verrouillée pour verrouiller le connecteur (2) et le contre-connecteur (3), lorsque le dispositif de sécurité (9) est dans sa seconde position.

9. Procédé selon la revendication 8, comprenant une étape d'alimentation en puissance du connecteur (2) et du contre-connecteur (3), l'étape d'alimentation étant commandée indépendamment d'un circuit d'interverrouillage.
